# EUROPEAN PATENT SPECIFICATION

(11) **EP 0 291 037 B1**
(45) Date of publication and mention of the grant of the patent: **21.07.1993**
(21) Application number: 88107584.0
(22) Date of filing: 11.05.1988
(51) Int. Cl.: F16B 5/06, E04G 17/00, F16B 12/20

(54) **Reversible joint for panels**
Beiderseitig verwendbare Verbindung von Platten
Joint réversible pour des panneaux

(30) Priority: 12.05.1987 IT 661087
(43) Date of publication of application: 17.11.1988
(73) Proprietor: MARIO ORLANDO E FIGLI S.R.L., I-95045 Misterbianco Catania (IT)
(72) Inventor: Orlando, Mario, I-95045 Misterbianco (Catania) (IT)
(74) Representative: Dr. Ing. A. Racheli & C. S.r.l.

(56) References cited:
- DE-B- 2 640 838
- FR-A- 1 321 921
- FR-A- 2 562 178
- GB-A- 573 229
- GB-A- 2 015 637

## Description

This invention concerns metallic joints for assembling panels when carrying out structures of various types, for example molds for concrete, containers, partitions, partition slabs etc.

At present to form the above-mentioned structures wooden boards or panels are used which are nailed to each other. This assembly damages the panels and takes a relatively long time.

The structure of a joint for assembling different parts in general and particularly panels, is tied to a series of problems i.e.: the need to carry out a resistent joint which at the same time can easily be dismantled, the possibility of replacing, with time, damaged elements belonging to the joint itself without having to replace the whole joint, the presence of projecting elements, troublesome when the structrure is used and also from the aesthetic point of view etc.

With the known joints the above problems have not been resolved.

GB-A-2 015 637 discloses a corner mounting assembly for wall or ceiling panels for permanent or long-life building structures, for example ship cabins. The described mounting assembly is proposed to solve the problem of reducing heat transmission between two wall faces; the problem of making the assembly and disassembly, therefore the positioning, of the panels to be joint easier is cited nowhere in the description, this problem being of little importance for long-life structures. The problem of reducing heat transmission is solved in GB-A-2 015 637 by providing an air gap between the elements of the joint, through which only thin screws extend, spaced from each other and well away from any contact with the panels, or with intermediate elements in contact with the panels.

The problem of positioning the panels to make the assembly and disassembly easier becomes instead very important in the field referred to by the present invention, since the frameworks are subject to frequent assembly and disassembly, which must take a limited time, while there is no interest in reducing heat transmission.

The problem that this invention is aimed at solving is therefore very different from the problem solved according to GB-A-2 015 637 and the inventive solution of the present application is different from the prior art solutions.

The aim of the invention is to carry out easily, and in a safe way, the jointing of single panels by means of metallic dismantable joints.

A further aim is to create a joint which does not have projecting parts which can prevent its use in some structures or which can ruin the aesthetics of the structure.

The above-mentioned aims have been reached by a joint according to claim 1. The metallic section bars are preferably of a modular length and clamp the panels on both sides and are placed along the discontinuity line between adjacent panels, said section bars being provided with a series of holes, at a predetermined centre distance, appropriately shaped to receive a removable connecting member, the locking of which can indifferently affect either of the two section bars.

The connecting bolt between the section bars can have a head shaped like a spherical bowl, with a smooth surface and a reduced size, the locking of the connecting member, in such a case, being carried out by the nut.

The connecting bolt is surrounded by said at least one spring and possibly by one or more spacers, which counteract the connection of the section bars.

One embodiment of the invention foresees, for example, an intermediate element, which on one side is adjacent to one end of a spacer, the opposite end of which abuts on one of the two outer section bars, while the other side is adjacent to one end of a compression spring, the other end of which abuts on the other section bar.

A different embodiment is provided with a single spring, each end of which rests on one of the outer clamping section bars.

The joint is preferably completed by an additional element, placed on the locking side of the connecting member, for example on the side opposite the bolthead, said element being capable of allowing the bracing of the section bars. The additional element can be made for example of a plate which can be positioned under the bolt nut, to which plate a sleeve is fixed which can receive a pin fixed to the brace, which can be a slanting shore or the like.

The section bars which make up the joint according to the invention can have for example a section substantially shaped like a V, that is a section which is particularly capable of allowing a non coplanar disposition of adjacent panels, for example a disposition at right angles.

The joint according to the invention allows the panels to be assembled in quite a short time, avoiding damaging them with nails.

The possibility of carrying out the locking indifferently on either side of the joint, that is the reversibility of the joint, makes the joint, according to this invention, advantageous for any use. In the jointing of panels of molds, as it is necessary for the inside of the mold to have a smooth surface, without locking elements, an external locking can be provided. In other structures, for example to satisfy aesthetic needs, the locking can be effected from inside.

Embodiments of the invention are illustrated in the attached drawings, in which:
- fig. 1: shows a plan view of a joint between orthogonal panels with the side unaffected by the locking on the inside;
- fig. 2: shows a view similar to that of figure 1, with the unaffected side outside;
- fig. 3: shows a front view of a section bar forming the joints of figures 1 and 2;
- fig. 4: shows a section view of the joint in figure 1;
- fig. 5: shows a plan view of a joint between panels arranged like a cross;
- fig. 6: shows a side view of a joint with an additional element;
- fig. 7: shows a front view of a section bar forming the joint of figure 6 with an additional element.

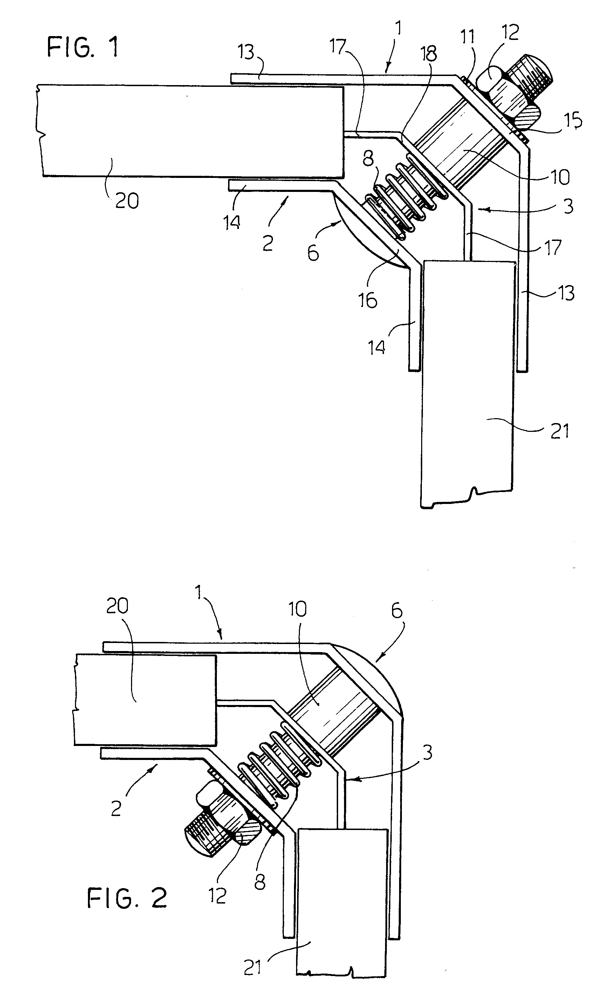

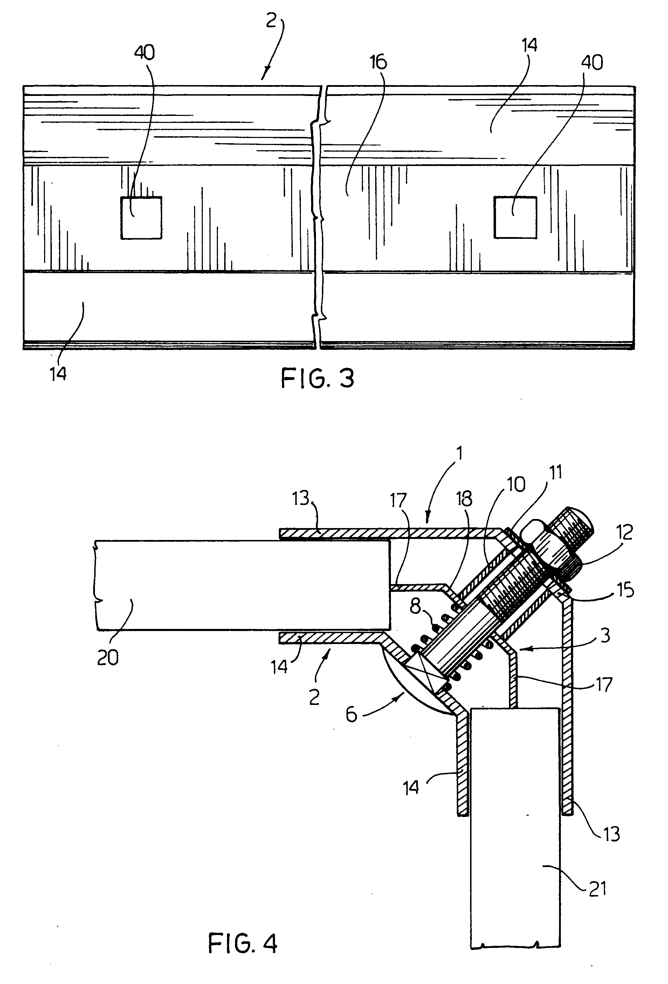

In figures 1 and 4 a joint between two panels 20 and 21 at right angles, is shown, which can be two vertical panels or one vertical panel and one horizontal panel, the illustrated joint can be positioned in the space with its axis in any way slanting. Along the discontinuity line between the two panels 20 and 21, two superposed elements, generally consisting of metallic section bars, 1 and 2, are placed, having a substantially V-shaped section. The section bars 1 and 2 have modular length and the length of the panels is affected by more adjoining pairs of section bars 1 and 2. The end part of each of the flanges 13 of the section bar 1 is adjacent to one face of one of the panels 20 or 21, while the end part of the flanges 14 of the section bar 2 is adjacent to the opposite face of the same panels 20 and 21. The central part 15 of the section bar 1 and the central part 16 of the section bar 2 have a series of quadrangular holes 40 (seen in figure 3) at a predetermined centre distance. Between the section bars 1 and 2 an intermediate section bar 3 is placed, having a section similar to that of section bars 1 and 2, but with shorter flanges. The end of each of the flanges or wings 17 of the section bar 3 rests on the end of one of the panels 20 and 21; the central part 18 of the section bar 3 has a series of holes placed coaxially to holes 40 of section bars 1 and 2. A bolt 6, which has a head with the shape of a spherical bowl, smooth and of a limited height, passes through the coaxial holes of the section bars 1, 2 and 3. The bolthead 6 engages the central part 16 of the section bar 2, that is the section bar placed inside the angle formed by the panels 20 and 21, while the nut 12 engages the central part 15 of the outer section bar 1, a washer 11 being placed between the nut 12 and the section bar 1. Between the section bar 1 and the intermediate section bar 3 a spacer 10 is provided, the ends of which respectively rest on the central part 15 of the section bar 1 and on the central part 18 of the section bar 3. Between the section bar 2 and the intermediate section bar 3 a spring 8 is provided, the ends of which respectively rest on the central part 18 of the intermediate section bar 3 and on the central part 16 of the section bar 2. The bolt 6 has a quadrangular body section under the head capable of being engaged, against rotation, with the quadrangular hole 40. The spring 8 and the spacer 10 surround the bolt body 6.

The joint described is capable of connecting panels which form structures of every kind, for example, molds for concrete works, partitions, partition slabs etc.

The spacer 10 forces the intermediate section bar 3 to be against the adjacent panels 20 and 21 in a central position, contrasted by the spring 8 which furthermore has the function of spacing the section bars 1 and 2 both in the assembly and unlocking stages.

The particular structure of the elements forming the joint allows the bolt 6 to be locked, by means of nut 12, indifferently from the side affected by the section bar 1 or from the side affected by the section bar 2, that is from the outside or inside of the angle formed by panels 20 and 21, and therefore allowing the reversibility of the joint.

In figure 1 the head of the bolt 6, which is smooth and slightly projecting, is inside the angle; this embodiment allows the assembly of molds, guaranteeing a substantially smooth and flat surface inside the joint (outside the carried out wall).

In figure 2, on the other hand, the head of the bolt 6 faces the outside of the angle of the joint (on the inside of the carried out wall).

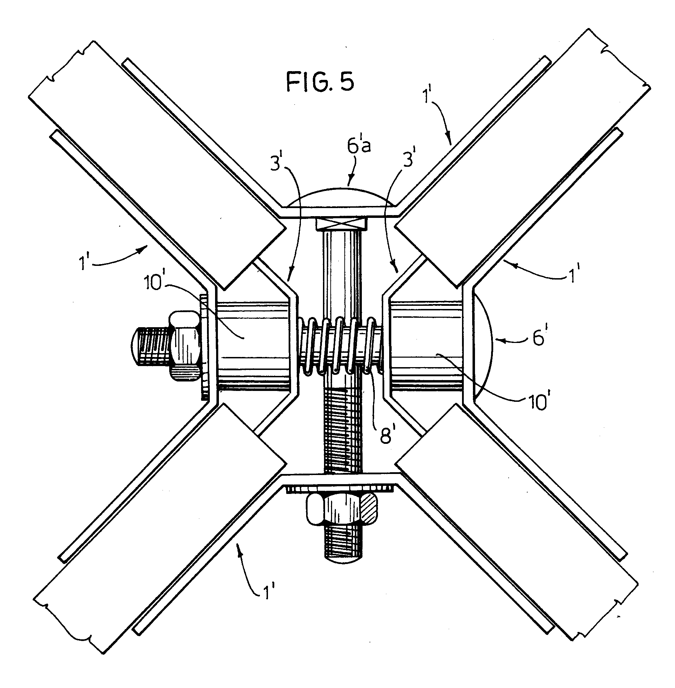

In figure 5 a joint for four panels is shown, which are arranged like a cross. At the outside of the joint the panels are joined two by two by four section bars 1' similar to the section bar 1 previously described referring to figures 1 and 4. Section bars 1' are joined like a cross by two bolts 6' and 6'a, one of which is surrounded by two end spacers 10' and by a central spring 8'. The ends of the spring 8' both abut against the central part of an intermediate section bar or iron 3', each spacer 10' being placed between a section bar 1' and an intermediate section bar 3'. All the elements shown in figure 5 have already been described in detail.

With the particulars described, and possibly with section bars having different cross-sectional shapes, it is possible to join panels however placed one with respect to the other, for example placed like a T, in addition to those shown.

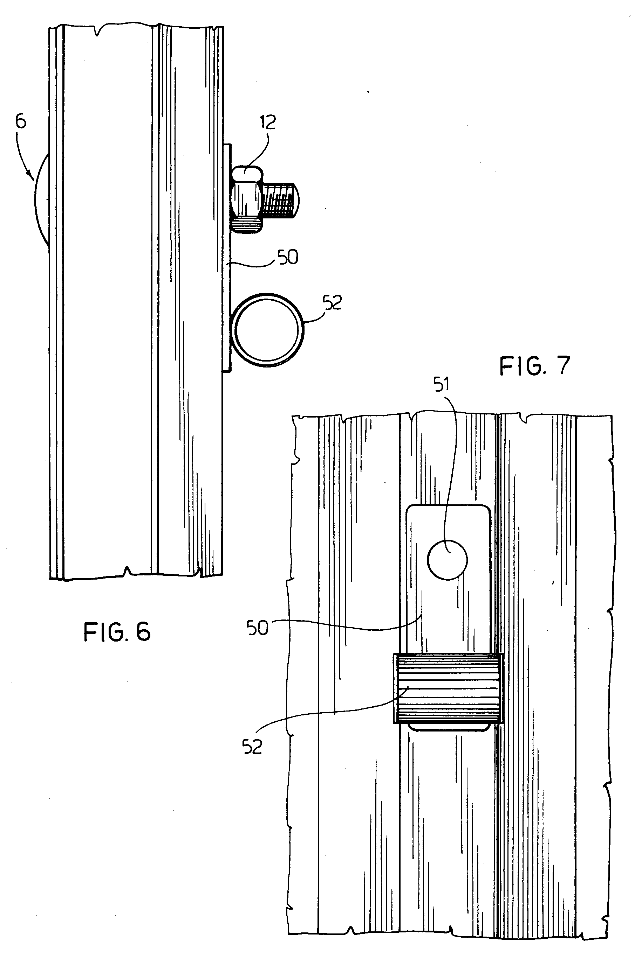

In figures 6 and 7 the possibility is shown of carrying out a joint with braced section bars. For this purpose an additional element is shown made up of a plate 50 provided with a hole 51 and a sleeve 52. The plate 50 is positioned under the nut 12 of the bolt 6, the hole 51 of the plate 50 receiving the body of the bolt 6. The sleeve 52, turned towards the outside, can engage with a pin fixed to a brace, which can be a slanting shore or the like.

## Claims

1. A joint for assembling panels in a dismantable way, particularly for making up molds for concrete casting, said joint including at least one pair of metallic clamping section bars (1,1',2) provided with a series of spaced holes (40), and at least one removable connecting bolt (6,6') with a nut (12) for the section bars (1,1',2), said bolt being coupled with said holes (40) in an antirotational way, the joint further including an intermediate section bar (3,) with through holes between said clamping section bars, to guarantee a correct distance between the panels to be jointed, said intermediate section bar being a self-contained element, said joint further comprising a spring (8,8') between two of said section bars (2,3,3'), said spring (8,8') acting on said section bars in opposition to the connecting bolt.

2. A joint according to claim 1, characterized in that the holes (40) of both clamping section bars are polygonal and the bolt (6,6') has a body part having a polygonal cross-section.

3. A joint according to claim 1, characterized in that it further comprises a spacer (10,10') between one of the clamping section bars and the intermediate section bar.

4. A joint according to claim 1, characterized in that said intermediate section bar (3) is adjacent on one side to one end of a spacer (10), the opposite end of which abuts on one of the two clamping section bars (1, 2), and on the other side to an end of the compression spring (8) the other end of which abuts on the other section bar (2).

5. A joint according to claim 1, characterized in that it includes an additional element comprising a plate (50) provided with a hole (51), capable of receiving said connecting bolt (6), and a sleeve (52) capable of receiving a pin fixed to a brace.

## Patentansprüche

1. Verbindung zum Zusammenfügen von Platten in lösbarer Form, insbesondere zum Herstellen von Formen zum Betongießen, mit wenigstens einem Paar metallischer Klemmschienen (1, 1', 2) mit einer Reihe von mit Abstand angeordneten Öffnungen (40) und mit wenigstens einem entfernbaren Verbindungsschraubbolzen (6, 6') mit einer Schraubenmutter (12) für die Klemmschienen (1, 1', 2), der mit den Öffungen (40) in drehfester Weise zusammenwirkt, wobei die Verbindung weiterhin eine Zwischenschiene (3) mit Durchgangsöffnungen zwischen den Klemmschienen aufweist, um einen korrekten Abstand zwischen den zu verbindenden Platten zu gewährleisten, und die Zwischenschiene ein eigenständiges Element ist und die Verbindung des weiteren eine Feder (8, 8') zwischen zwei der Schienen (2, 3, 3') aufweist, die auf die Schienen entgegen der Wirkung des Verbindungsschraubbolzen wirkt.

2. Verbindung nach Anspruch 1, dadurch gekennzeichnet, daß die Öffnungen (40) beider Klemmschienen vieleckig sind und der Schraubbolzen (6, 6') ein Teilstück mit einem mehreckigen Querschnitt aufweist.

3. Verbindung nach Anspruch 1, dadurch gekennzeichnet, daß sie weiter einen Abstandshalter (10, 10') zwischen einer der Klemmschienen und der Zwischenschiene aufweist.

4. Verbindung nach Anspruch 1, dadurch gekennzeichnet, daß die Zwischenschiene (3) mit ihrer einen Seite an ein Ende eines Abstandshalters (10) angrenzt, dessen entgegengesetztes Ende an einer der beiden Klemmschienen (1, 2) anliegt, und mit ihrer anderen Seite an ein Ende der Druckfeder (8) angrenzt, deren anderes Ende der anderen Klemmschiene (2) anliegt.

5. Verbindung nach Anspruch 1, dadurch gekennzeichnet, daß sie ein zusätzliches Element mit einer Platte (50) aufweist, die mit einer Bohrung (51), welche den Verbindungsschraubbolzen (6) aufnehmen kann, und einer Hülse (52), die einen an einem Riegel befestigten Bolzen aufnehmen kann, versehen ist.

## Revendications

1. Joint pour assemblage démontable de panneaux, notamment pour former des coffrages pour le jet de béton, ledit joint comprenant au moins un couple de profilés métalliques (1, 1', 2) de prise munis d'une série de trous (40) distancés, et d'au moins un boulon de liaison amovible (6, 6') avec un écrou (12) pour les profilés (1, 1', 2), ledit boulon étant couplé auxdits trous (40) sans possibilité de rotation, ledit joint comprenant en outre un profilé intermédiaire (3) avec des trous passants entre lesdits profilés de prise pour garantir la bonne distance des panneaux à assembler, ledit profilé intermédiaire étant un élément indépendent, ledit joint comprenant en outre un ressort (8, 8') entre deux desdits profilés (2, 3, 3'), ledit ressort (8, 8') agissant sur lesdits profilés en opposition au boulon de liaison.

2. Joint selon la revendication 1, caractérisé en ce que les trous (40) dans les deux profilés de prise sont polygonaux et que le boulon (6, 6') a une portion de tige à section polygonale.

3. Joint selon la revendication 1, caractérisé en ce qu'il comprend une entretoise (10, 10') entre un des profilés de prise et le profilé intermédiaire.

4. Joint selon la revendication 1, caractérisé en ce que ledit profilé intermédiaire (3) est adjacent d'un côté à une extrémité d'une entretoise (10), dont l'extrémité opposée s'appuie sur l'un des deux profilés (1, 2) de prise, et de l'autre côté sur une extrémité du ressort (8) de compression dont l'autre extrémité s'appuie sur l'autre profilé (2).

5. Joint selon la revendication 1, caractérisé en ce qu'il comprend un élément accessoire, formé d'une plaque (50) munie d'un trou (51) pouvant recevoir ledit boulon de liaison (6) et une douille (52) pouvant recevoir un axe solidaire d'un contrevent.
